# EUROPEAN PATENT APPLICATION

(11) **EP 3 544 149 A1**
(43) Date of publication of application: **25.09.2019**
(21) Application number: 18849436.3
(22) Date of filing: 18.01.2018
(51) Int. Cl.: H02J 50/12

(54) **WIRELESS POWER TRANSFER SYSTEM AND TRANSFER METHOD THEREFOR**

(71) Applicant: Tongji University, Shanghai 200092 (CN)
(72) Inventor: LI, Yunhui, Shanghai 200092 (CN); ZHU, Kejia, Shanghai 200092 (CN); ZENG, Chao, Shanghai 200092 (CN); JIANG, Jun, Shanghai 200092 (CN); SUN, Yong, Shanghai 200092 (CN); FANG, Kai, Shanghai 200092 (CN); CHEN, Yuguang, Shanghai 200092 (CN); ZHANG, Yewen, Shanghai 200092 (CN); CHEN, Hong, Shanghai 200092 (CN)
(74) Representative: dompatent von Kreisler Selting Werner - Partnerschaft von Patent- und Rechtsanwälten mbB
(86) International application number: PCT/CN2018/073195
(87) International publication number: WO 2019/140589

(57) **Abstract**

A wireless power transfer system has a signal source, an exciting coil, a pair of resonance coils having the same resonance frequency, a receiving coil and a load. The resonance frequency is regulated by the pair of resonance coils. The working frequency is made close to the resonance frequency of the resonance coils by means of the physical properties of a single-mode point in a non-Hermitian system, so as to regulate the energy transfer rate by controlling the distance between the receiving coil and the adjacent resonance coil. The system is located at the single-mode point while the coupling distance between the pair of resonance coils is changed and efficient wireless power transfer and mono-frequency efficient wireless power transfer within the kHz frequency range are realized by means of the physical properties of fixed frequency and minimum loss at the single-mode point.

## Description

### BACKGROUND OF THE INVENTION

### 1. Technical Field

The invention relates to the technical field of wireless power transfer, in particular to a wireless power transfer system and method using non-radiative magnetic-field coupling coils.

### 2. Description of Related Art

Wireless power transfer (WPT) is to transform electricity power to another form of intermediate energy such as electromagnetic field energy, lasers, microwaves and mechanical waves by a transmitter and then the intermediate energy is converted by receivers into electricity power again after being transferred in air for a certain distance. In terms of different forms of the intermediate energy in the electricity power transfer process, there are wireless power transfer of a magnetic-field coupling type, wireless power transfer of an electric field coupling type, wireless power transfer of an electromagnetic radiation type and wireless power transfer of a mechanical wave coupling (ultrasonic wave coupling) type. Due to the high transfer power and high efficiency, wireless power transfer of the magnetic-field coupling type is used more widely than other forms of wireless power transfer.

In recent years, researchers have developed a non-radiative wireless electricity power transfer system by means of the near field based on magnetic-field coupling, and this great breakthrough leads to deeper study in wireless power transfer-related applications. Because of the limitations of the wireless electricity power transfer mechanism, the non-radiative wireless transfer system only can fulfill the maximum transfer efficiency at a certain working frequency within one fixed distance, and thus, it is very important to realize the applications of effective electricity power transfer to different transfer distances. The traditional method adopted to fulfill this objective is to track the frequency point of the best transfer efficiency by an additional circuit. However, by adoption of this method, modulation to and feedback from both the exciting terminal and the receiving terminal are required, and complicated components and systems are likely to be seriously damaged and even burnt out when operating under high power.

Notably, Professor Fan S. H., Stanford University, puts forwards a robust system to fulfill high power transfer efficiency in spite of distance changes by means of the eigenmode of a nonlinear circuit automatic parity-time symmetry system. Even this scheme can realize effective power transfer within a certain distance, the instability of the system is still left unsolved due to the complexity of circuit elements under high power. In addition, this system has two real eigenmodes and an extra effective gain, but only one eigenmode is used for power transfer, which leads to a waste to the other eigenmode. According to such a design, not only an existing element is wasted, additional power consumption is consumed as well.

In sum, using non-radiative magnetic-field coupling coils to undergo wireless power transfer seems to be a trend in this field, however, the reduction of transfer efficiency caused by near-field coupling mode splitting is still a problem yet to be solved. For the time being, there is still no effective solution capable of ensuring stable system working frequency and efficiency under the consideration of the variations of transfer distance.

### BRIEF SUMMARY OF THE INVENTION

In view of the above-mentioned problems, the invention provides a wireless power transfer system and method. The wireless power transfer system mainly comprises a signal source, an exciting coil, a pair of resonance coils having the same resonance frequency, a receiving coil and a load. The resonance frequency is regulated by the pair of resonance coils formed by winding litz wires on side faces of organic glass plates and by loading capacitors, and the working frequency is made close to the resonance frequency of the resonance coils by means of the physical properties of a single-mode point in a non-Hermitian system, so as to regulate the energy transfer rate out of the system by controlling the distance between the receiving coil and the adjacent resonance coil. With such a design, it is ensured that the system is located at the single-mode point while the coupling distance between the pair of resonance coils is changed, the technical defects of the prior art are overcome, and effective wireless power transfer and mono-frequency efficient wireless power transfer within the KHz frequency range are realized by means of the physical properties of fixed frequency and minimum loss at the single-mode point.

To fulfill the above objective, the preferred embodiments of the invention provides a wireless power transfer system. The wireless power transfer system comprises a dual resonance coil device. The dual resonance coil device comprises a first resonance coil having a first resonance frequency and a second resonance coil bearing a frequency the same as that of the first resonance coil. The dual resonance coil device adjusts the coupling distance between the first resonance coil and the second resonance coil to correlate the adjustment to the electromagnetic parameters of the first resonance coil and the second resonance coil and to fulfill the wireless power transfer system with a single fixed frequency at the single-mode point.

In this embodiment of the wireless power transfer system of the invention, the dual resonance coil device further comprises an exciting coil and a receiving coil, wherein the first resonance coil and the second resonance coil are arranged between the exciting coil and the receiving coil. The first resonance coil is close and adjacent to the exciting coil, and the second resonance coil is close and adjacent to the receiving coil. The distance between the exciting coil and the first resonance coil is defined as a first distance, the distance between the receiving coil and the second resonance coil is defined as a second distance. The distance between the first resonance coil and the second resonance coil is defined as a coupling distance. The wireless power transfer system can adjust the energy transfer rate by controlling the first distance and the second distance and can be in a single-mode point state by changing the coupling distance to correlate the adjustment to the electromagnetic parameters of the resonance coils.

In this preferred embodiment of the wireless power transfer system of the present invention, the system further comprises a signal source and a load which are electrically connected to the dual resonance coil device, wherein the signal source is electrically connected to the exciting coil, and the load is electrically connected to the receiving coil.

In this embodiment of the wireless power transfer system of the invention, the first resonance coil and the second resonance coil are wound by multiple turns and lumped parameter elements are loaded to regulate the resonance frequency.

In this embodiment of the wireless power transfer system of the invention, the working frequency of the dual resonance coils is 1kHz-100MHz.

In this embodiment of the wireless power transfer system of the invention, the first resonance coil and the second resonance coil respectively have a coil size smaller than 1/1000 of a working wavelength.

The invention further provides a wireless power transfer method. The method comprises the following steps:
providing a first resonance coil and a second resonance coil having a resonance frequency the same as that of the first resonance coil to form a dual resonance coil;
spacing the first resonance coil from the second resonance coil to form a coupling distance; and
adjusting the coupling distance to correlate adjustment to electromagnetic parameters of the dual resonance coil to make the two resonance coils in a single-mode-point fixed-frequency state to carry out power transfer.

In this embodiment of the wireless power transfer method of the invention, the method further comprises the following steps:
sandwiching the first resonance coil and the second resonance coil between an exciting coil and a receiving coil so that distance from the exciting coil to the first resonance coil is defined as a first distance, and distance from the receiving coil to the second resonance coil is defined as a second distance;
adjusting the first distance and the second distance to reach coupling and obtain a wireless power transfer rate; and
locking the wireless power transfer rate at a fixed frequency to form a single-mode point, so that a single-mode-point wireless power transfer at a fixed-frequency with adjustable distances carried out.

In this embodiment of the wireless power transfer method of the invention, the first resonance coil and the second resonance coil are wound by multiple turns and lumped parameter elements are loaded to regulate the resonance frequency, wherein the resonance frequency is 1kHz-100MHz, and the working frequency for wireless power transfer is close to the resonance frequency.

In this embodiment of the wireless power transfer method of the invention, the first resonance coil and the second resonance coil have a coil size smaller than 1/1000 of a working wavelength.

By adoption of the above technical scheme, the invention has the following beneficial effects:
(1) The working frequency of the wireless power transfer system is made close to the resonance frequency of the resonance coils by means of the physical properties of the single-mode point, so that additional frequency tracking circuit and a broadband signal source in traditional schemes can be omitted.
(2) The exciting coil, the receiving coil and the two resonance coils in the dual resonance coil device support power transfer over 100 watts, and the system is free from complicated and complex circuit elements, thereby having better stability than traditional solutions when operating at high power.
(3) When the coupling distance between the resonance coils is changed, the wireless power transfer system can still track the single-mode point by adjusting the distance between the receiving coil and the corresponding resonance coil, thereby having the effects of simple operation, efficient and stable power transfer.

These objectives, characteristics and advantages and other ones of the invention are fully reflected below in the detailed description of the invention and claims, and the invention can be implemented by means and devices specified in the claims and combinations of these means and devices.

### BRIEF DESCRIPTION OF THE SEVERAL VIEWS OF THE DRAWINGS

FIG. 1 is a plan view of an organic glass plate of a dual resonance coil device of the invention;
FIG. 2 is a side view of the organic glass plate in FIG. 1 of the invention;
FIG. 3 is a plan view of a metal wire on a side face of the organic glass plate of the dual resonance coil device of the invention;
FIG. 4 is a side view of the metal wire on the organic glass plate in FIG. 1 of the invention.
FIG. 5 is a schematic diagram of a wireless power transfer system of the invention.
FIG. 6 is an efficiency comparison diagram before and after the wireless power transfer system of the invention is adjusted to a single-mode point in a strong coupling region (ex. coupling distance d=10cm) by decreasing a second distance d2 to 0.5cm from 10cm.
FIG. 7 is an efficiency comparison diagram before and after the wireless power transfer system of the invention is adjusted to the single-mode point in a weak coupling region (ex. coupling distance d=60cm) by increasing the second distance d2 to 15cm from 5cm.
FIG. 8 is a curve chart of multiple groups of experimental results of the transfer efficiency (longitudinal-axis coordinates) of the wireless power transfer system at the eigenfrequency of resonance coils and changes to the coupling distance d (abscissa-axis coordinates) of the resonance coils.

### Components corresponding to reference signs:

Signal source 10; exciting coil 20; transmitting terminal glass frame 21; first resonance coil 30; insulating dielectric plate 31; metal wire 32; second resonance coil 40; receiving coil 50; receiving terminal glass frame 51; load 60; first distance d1; second distance d2; coupling distance d; outer radius length L1; inner radius length L2; thickness L3; length L4.

### DETAILED DESCRIPTION OF THE INVENTION

A detailed specific implementation of the invention is disclosed below. However, it should be understood that this implementation is only a typical one of the invention and the invention can also be implemented in various other forms. Thus, specific structures and functional details in the following disclosure are not restrictive and are only representative ones used for explaining different embodiments to those skilled in this field based on the claims.

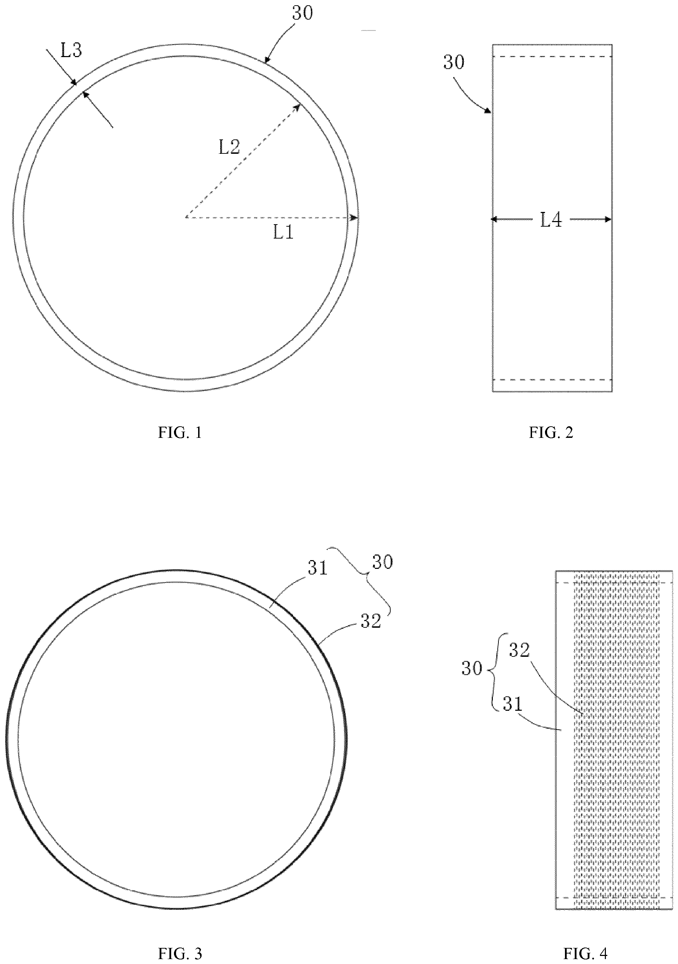

For the sake of a better understanding, the invention is explained below with reference to FIGs. 1-8 and embodiments.

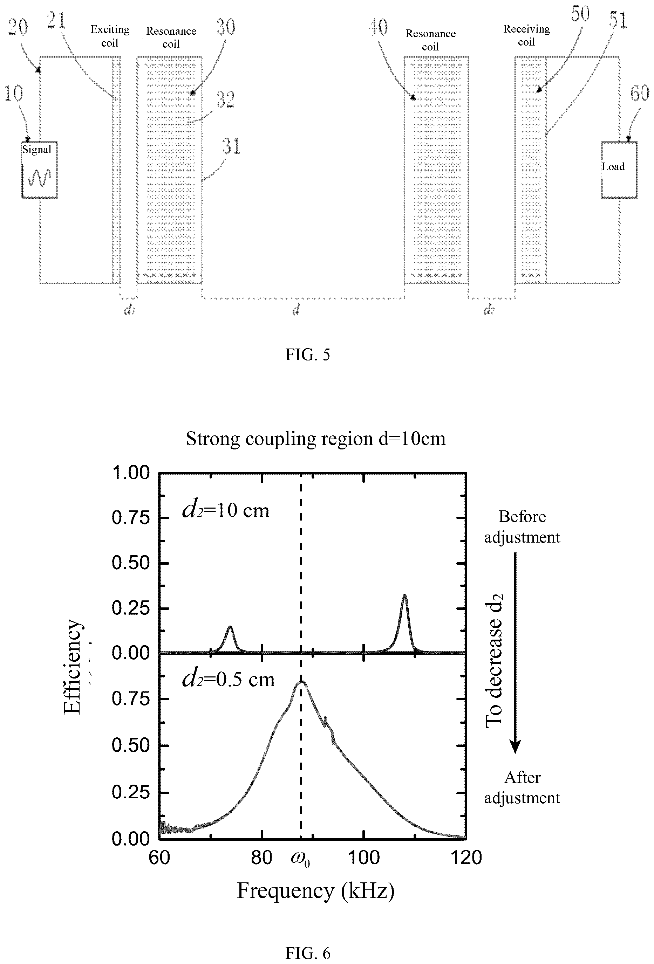

Referring to FIGs. 1-4 and FIG. 5, the invention provides a dual resonance coil device and a wireless power transfer system comprising the dual resonance coil device. As shown in FIG. 5, the dual resonance coil device has an exciting coil 20, a first resonance coil 30, a second resonance coil 40 and a receiving coil 50. The wireless power transfer system further comprises a signal source 10 electrically connected to the exciting coil 20 and a load 60 electrically connected to the receiving coil 50.

As shown in FIG. 5, the exciting coil 20 is wound on an outer circumferential surface of a cylindrical transmitting terminal glass frame 21. Particularly, the number of turns of the exciting coil 20 is in an odd number, and the transmitting terminal glass frame 21 has a diameter of 600mm and 50mm in length. The receiving coil 50 is wound on an outer circumferential surface of a cylindrical receiving terminal glass frame 51. Particularly, the number of turns of the receiving coil 50 so wound is ten, and the receiving terminal glass frame 51 has a diameter of 600mm and a length of 100mm.

As shown in FIGs. 1-4, the first resonance coil 30 and the second resonance coil 40 of the dual resonance coil device are identical in structure. The first resonance coil 30 and the second resonance coil 40 have a deep sub-wavelength scale and a cell size smaller than 1/1000 of the working wavelength, thereby possessing deep sub-wavelength characteristics. Particularly, the resonance coils have a diameter not over 65cm and a thickness not over 10cm, for instance, under a working frequency of 85kHz for wireless charging of electric automobiles.

Taking the first resonance coil 30 as an example, it is to be noted that the first resonance coil 30 comprises an insulating dielectric plate 31, a metal wire 32 and lumped parameter elements (not shown). The first resonance coil 30 is of a multi-turn structure, frequency tuning between the first resonance coil 30 and the second resonance coil 40 is realized by the lumped parameter elements, and frequency correlation between the first resonance coil 30 and the second resonance coil 40 is accomplished. Also, with the equivalent-magnetic permeability to the metal wire 32, resonance between two resonance coils is realized.

FIG. 1 is a plan view of the insulating dielectric plate 31 of the dual resonance coil device of the invention, and FIG. 2 is a side view of the insulating dielectric plate 31 of the dual resonance coil device of the invention. As shown in FIG. 1 and FIG. 2, the insulating dielectric plate 31 is of a hollow cylindrical structure and is an organic glass plate, and particularly, the organic glass plate is made from, but not limited to, polymethyl methacrylate (PMMA).

FIG. 3 is a plan view of the metal wire 32 wound on the insulating dielectric plate 31 of the dual resonance coil device of the invention, and FIG. 4 is a side view of the metal wire 32 wound on the insulating dielectric plate 31 of the dual resonance coil device of the invention. As shown in FIG. 3 and FIG. 4, in this embodiment, the metal wire 32 of the dual resonance coil device is closely wound on the insulating dielectric plate 31 by multiple turns to support a high voltage over 220V as well as a large current over 5A. The metal wire 32 is selected from a solid copper wire, a litz wire or a red copper tube. Particularly, the metal wire 32 of the dual resonance coil device is preferably a litz wire having a specification of 0.1^{∗}200 (each strand has a sectional diameter of 0.1mm). The litz wire is a polyester silk-covered wire, preferably a polyester silk-covered wire with a polyurethane enameled wire as a core, and has an outer diameter of about 0.95mm, and the copper core has a sectional area of about 0.393 mm².

In this embodiment, the dual resonance coil device adopts the lumped parameter elements capable of withstanding a high voltage over 220V, and the lumped parameter elements are welded to the head end and the tail end of the metal wire 32 to be assembled on the insulating dielectric plate 31 (not shown). Particularly, the lumped parameter elements are metalized polyester film capacitors having a specification of 5.6 nF/1000V.

In this embodiment, the frequency of the dual resonance coil device is within the range of, but not limited to, 1kHz-100MHz.

As shown in FIG. 5, the wireless power transfer system comprises the dual resonance coil device, the signal source 10 and the load 60. The distance between the exciting coil 20 and the first resonance coil 30 is defined as a first distance d1. The distance between the receiving coil 50 and the second resonance coil 40 is defined as a second distance d2 and the distance between the first resonance coil 30 and the second resonance coil 40 is defined as a coupling distance d. In this embodiment, the signal source 10 is used for receiving signals and to allow signals at the eigenfrequency to enter the exciting coil 20. The wireless power transfer system regulates the energy transfer rate out of the system by controlling the first distance d1 and the second distance d2 and the wireless power transfer system can be in a single-mode point state by changing the coupling distanced.

Embodiments of the wireless power transfer system and method of the invention are explained below with reference to FIGs. 1-8.

### Embodiment 1:

In this embodiment, a wireless power transfer system comprising a dual resonance coil device is provided.

The wireless power transfer system can be used for wireless power transfer for high-power electric automobiles under a working frequency of 85KHz and comprises a signal source 10, an exciting coil 20, a pair of coils having a resonance frequency of 85kHz (a first resonance coil 30 and a second resonance coil 40), a receiving coil 50 and a load 60. Each resonance coil is formed by an organic glass plate (insulating dielectric plate), a litz wire (metal wire) closely wound on the organic glass plate by 22 turns and capacitors (lumped parameter elements) welded to the litz wire.

The resonance coil is prepared through the following steps:

The litz wire is closely wound on a side face of the organic glass plate by 22 turns, and then the capacitors are connected to the head end and the tail end of the litz wire.

The structure of the organic glass plate in the preferred embodiment 1 is shown in FIG. 1 and FIG. 2. The organic glass plate is made from PMMA and has the following geometrical parameters: the outer radius length (L1) is 300mm, the inner radius length (L2) is 295mm, the thickness (L3) is 5mm, and the length (L4) is 250mm.

The litz wire in this embodiment is a polyester silk-covered wire with a polyurethane enameled wire as a core and has a specification of 0.1^{∗}200. In embodiment 1, the geometrical parameters of the litz wire are as follows: the sectional diameter is about 0.95mm, and the sectional area of the copper core is about 0.393mm2. The litz wire in embodiment 1 has an overall length of about 42m.

The capacitors are 5.6nF metalized polyester film direct-plug capacitors capable of withstanding a high voltage over 220V.

### Embodiment 2:

In this embodiment, an operation method of the wireless power transfer system in embodiment 1 is provided.

FIG. 5 shows the high-power efficient wireless power transfer system applicable to a working frequency of 85kHz. As shown in FIG. 5, after a signal at the eigenfrequency is made to enter the exciting coil via the signal source, the first resonance coil is excited Afterwards, power is transmitted to the second resonance coil through near-field magnetic coupling. Finally, the power is coupled out via the receiving coil to be received by the load, wherein d1, d and d2 separately refer to the distance between the exciting coil and the first resonance coil, the distance between the resonance coils and the distance between the second resonance coil and the receiving coil.

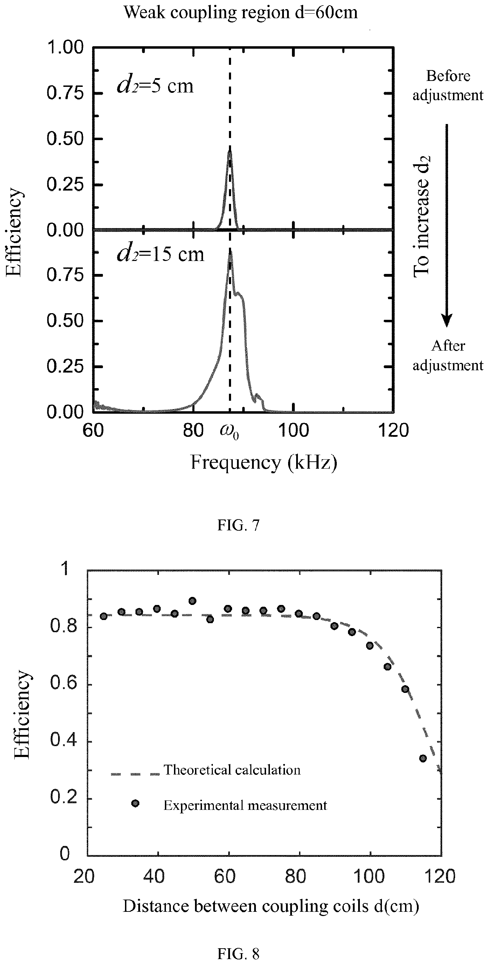

FIG. 6 is an efficiency comparison diagram before and after the system in embodiment 1 is adjusted to a single-mode point in by regulating the coupling distance d into a strong coupling region, and FIG. 7 is an efficiency comparison diagram before and after the system in embodiment 1 is adjusted to the single-mode point in by regulating the coupling distance d into a weak coupling region, wherein the experimental frequency, namely the resonance frequency ω0 of the coils, is kHz, and the first distance d1 is set to 0cm.

As shown in FIG. 6, when the system is in the strong coupling region (ex. coupling distance d=10cm), energy is coupled out of the resonance coils at a very low rate before adjustment (second distance d2=10cm), and the transfer efficiency at the eigenfrequency is extremely low due to mode splitting caused by the near-field effect. In this case, real parts of the two eigenmodes of the wireless power transfer system of the invention are combined (namely, the working frequency is actually the resonance frequency) by adjusting the second distance d2 to 0.5cm, and then power transfer can be carried out at the single-mode point (the maximum efficiency) without virtual parts.

As shown in FIG. 7, when the system is in the weak coupling region (ex. coupling distance d=60cm), energy is coupled out of the resonance coils at a very high rate before adjustment (second distance d2=5cm), so that energy losses are caused by the excessively large virtual parts of the eigenmodes, and the transfer efficiency is low. In this case, the wireless power transfer system can be recovered to the singe-mode point by adjusting second distance d2 to 15cm to carry out power transfer, and the transfer efficiency at the resonance frequency in this condition is basically the same as that under the strong coupling condition.

The above two typical cases show that the system can reach the single-mode point in any states by properly adjusting the energy rate coupled out of the system, thus, fulfilling efficient mono-frequency power transfer.

FIG. 8 is a curve chart of multiple groups of experimental results of the transfer efficiency of the wireless power transfer system at the eigenfrequency of resonance coils and changes to the coupling distance of the resonance coils, wherein a group of test results are acquired every 5cm of the coupling distance d, and the dotted line refers to theoretical calculation results. As can be seen from FIG. 8, efficient power transfer can be realized as long as the distance between the resonance coils is within 75cm, and beyond this distance range, the power transfer efficiency is reduced due to material wastage.

In embodiment 2, the test results in FIG. 6, FIG. 7 and FIG. 8 are obtained specifically by connecting the exciting coil to Port 1 of a Keysight E5071C network analyzer and by connecting the receiving coil to Port 2 of the network analyzer, then reflection parameters S11 and transmission parameters S12 are recorded, and finally, the power transfer efficiency of the system is obtained through calculation.

The invention is expounded above with reference to the accompanying drawings and embodiments, and those ordinarily skilled in this field can obtain various variations according to the above description. Thus, certain details in the above embodiments are not intended to limit the invention, and the protection scope of the invention is subject to the scope defined by the claims.

## Claims

1. A wireless power transfer system having therein a dual resonance coil device, **characterized in that**:
the dual resonance coil device comprises a first resonance coil and a second resonance coil having a resonance frequency the same as that of the first resonance coil such that adjusting distance between the first resonance coil and the second resonance coil to correlate adjustment to electromagnetic parameters of the first resonance coil and the second resonance coil is able to fulfill wireless power transfer with a fixed frequency at a single-mode point.

2. The wireless power transfer system according to claim 1, wherein the dual resonance coil device further comprises an exciting coil and a receiving coil with the first resonance coil and the second resonance coil sandwiched there between, and the first resonance coil is closely adjacent to the exciting coil, and the second resonance coil is closely adjacent to the receiving coil;
a distance between the exciting coil and the first resonance coil is defined as a first distance, a distance between the receiving coil and the second resonance coil is defined as a second distance, and a distance between the first resonance coil and the second resonance coil is defined as a coupling distance;
thereby controlling the first distance and the second distance adjusts an energy transfer rate and changing the coupling distance to correlate adjustment to electromagnetic parameters of the first resonance coil and the second resonance coil is able to be in a single-mode point state.

3. The wireless power transfer system according to claim 2, wherein the system further comprises a signal source and a load which are electrically connected to the dual resonance coil device, the signal source is electrically connected to the exciting coil, and the load is electrically connected to the receiving coil.

4. The wireless power transfer system according to any one of the claims 1-3, wherein the first resonance coil and the second resonance coil are wound by multiple turns and lumped parameter elements are loaded to regulate the resonance frequency.

5. The wireless power transfer system according to claim 4, wherein the first resonance coil and the second resonance coil respectively have a working frequency of 1kHz-100MHz.

6. The wireless power transfer system according to claim 4, wherein the first resonance coil and the second resonance coil have a size smaller than 1/1000 of a working wavelength.

7. A wireless power transfer method comprising the steps of:
providing a first resonance coil and a second resonance coil having a frequency the same as that of the first resonance coil so as to form a dual resonance coil device ;
spacing the first resonance coil from the second resonance coil to form a coupling distance; and
adjusting the coupling distance to correlate adjustment to electromagnetic parameters of the first resonance coil and the second resonance coil to allow the first resonance and the second resonance coil to be in a single-mode-point state to carry out wireless power transfer at a fixed-frequency.

8. The method as claimed in claim 7 further comprising the step of:
disposing the first resonance coil and the second resonance coil between an exciting coil and a receiving coil;
spacing the exciting coil from the first resonance coil by a first distance, and spacing the receiving coil from the second resonance coil by a second distance;
adjusting the first distance and the second distance to obtain a wireless power transfer rate through coupling, and
locking the wireless power transfer rate at a fixed frequency to form a single-mode point, so that, distance-adjustable, single-mode point wireless power transfer at a fixed-frequency is carried out.

9. The method as claimed in claim 7 or claim 8, wherein:
the first resonance coil and the second resonance coil are wound by multiple turns and lumped parameter elements are loaded to regulate the resonance frequency, wherein the resonance frequency is 1kHz-100MHz, and a working frequency for wireless power transfer is close to the resonance frequency.

10. The method as claimed in claim 9, wherein:
the first resonance coil and the second resonance coil respectively have a size smaller than 1/1000 of a working wavelength.
